# EUROPEAN PATENT SPECIFICATION

(11) **EP 1 816 162 B1**
(45) Date of publication and mention of the grant of the patent: **07.01.2015**
(21) Application number: 05809652.0
(22) Date of filing: 25.11.2005
(51) Int. Cl.: C08L 27/12

(54) **THERMOPLASTIC POLYMER COMPOSITION**
THERMOPLASTISCHE POLYMERZUSAMMENSETZUNG
COMPOSITION POLYMERE THERMOPLASTIQUE

(30) Priority: 26.11.2004 JP 2004342771; 14.09.2005 JP 2005267183
(43) Date of publication of application: 08.08.2007
(73) Proprietor: DAIKIN INDUSTRIES, LTD., Osaka-shi, Osaka 530-8323 (JP)
(72) Inventor: MASUDA, Haruhisa, Settsu-shi, Osaka 5668585 (JP); OTANI, Mitsuhiro, Settsu-shi, Osaka 5668585 (JP); YANAGIGUCHI, Tomihiko, Settsu-shi, Osaka 5668585 (JP); ICHISAKA, Toshiki, Settsu-shi, Osaka 5668585 (JP)
(74) Representative: Hoffmann Eitle
(86) International application number: PCT/JP2005/021666
(87) International publication number: WO 2006/057331

(56) References cited:
- EP-A- 0 543 342
- WO-A-01/98405
- JP-A- 4 108 845
- JP-A- 5 140 401
- JP-A- 6 088 001
- JP-A- 6 228 397
- JP-A- 6 228 397
- JP-A- 10 101 880
- JP-A- 61 057 641
- US-B1- 6 624 251

## Description

### TECHNICAL FIELD

The present invention relates to a molded article, a sealing material, peripheral parts of fuel system, a fuel hose and a fuel container, which comprise a thermoplastic polymer composition comprising a fluororesin and a crosslinked fluororubber.

### BACKGROUND ART

Crosslinked rubbers are widely employed for various uses in the fields of automobiles, parts for electric appliances, covering of electric wire, parts for medical use, etc. since those rubbers have excellent properties such as heat resistance, chemical resistance and flexibility. However in order to produce a molded article by using crosslinked rubbers, it is usual to employ complicated processes, for example, (1) a step for kneading an uncrosslinked rubber together with a crosslinking agent, an acid acceptor, a filler, etc., (2) a step for molding with an extruder or an injection-molding machine and (3) a step for crosslinking with a press or an oven, thus taking time for obtaining a molded article. Also the molded article has problems that since the crosslinked rubber is not melted after the crosslinking, post-processing such as melt deposition cannot be carried out and recycling is impossible.

In order to solve the mentioned problems, a so-called dynamically crosslinking technique in which crosslinking is carried out while melt-kneading a thermoplastic resin such as a polypropylene resin and an uncrosslinked crosslinkable rubber together with a crosslinking agent has been developed.

This technique says that a thermoplastic resin composition in which crosslinked rubber particles are dispersed in a thermoplastic resin such as a polypropylene resin can be obtained, and the thermoplastic resin composition is thermoplastic and is capable of melt-molding and recycling and can exhibit performances nearly equal to those of crosslinked rubber. Examples of such a dynamically crosslinked rubber (TPV) are, for instance, those having a structure in which crosslinked ethylene-propylene-diene rubbers (EPDM) are dispersed in a polypropylene resin (cf. for example, JP-A-6-287368, JP-A-6-256571 or JP-A-11-228750). Those rubbers are widely studied, and a part thereof have been put into practical use.

However the present situation of the above described TPV comprising a polypropylene resin and a crosslinked EPDM is such that since a matrix thereof is a polypropylene resin, heat resistance is not exhibited at a temperature of not less than the melting point of the polypropylene resin and also chemical resistance is poor.

There is known rubbers having such a structure that a polyester resin or 4-methyl-1-pentene resin is used as a matrix and crosslinked rubbers are dispersed for the purpose of developing TPV being excellent in heat resistance and chemical resistance (cf., for example, JP-A-10-212392 and JP-A-11-269330). However though those TPV have somewhat enhanced heat resistance and chemical resistance as compared with TPV comprising a polypropylene resin and a crosslinked EPDM, there is a problem that such heat resistance and chemical resistance are still insufficient and flexibility and mechanical characteristics are poor.

Further TPV prepared using a fluororesin as a matrix and having a structure in which crosslinked fluororubbers are dispersed as a crosslinked rubber have been studied (cf., for example, JP-A-61-57641, JP-A-5-140401 or JP-A-6-228397). Such TPV have excellent heat resistance and chemical resistance attributable to the fluororesin as a matrix, but is inferior in properties such as flexibility and compression set because dispersion of crosslinked fluororubbers is non-uniform, and mold-processability cannot be said to be sufficient.

### DISCLOSURE OF INVENTION

The thermoplastic polymer composition used in the present invention is flexible, is excellent in mold-processability and has excellent heat resistance, chemical resistance, oil resistance, and fuel barrier property.

Namely, the thermoplastic polymer composition comprises 10 to 95 % by weight of a fluororesin (A) and 90 to 5 % by weight of a crosslinked fluororubber (B), in which the fluororubber (A) comprises a fluorine-containing ethylenic polymer (a) having a melting point of 120° to 330°C and the crosslinked fluororubber (B) is a rubber obtained by crosslinking dynamically at least one kind of fluororubber (b-1) or a fluorine-containing thermoplastic elastomer (b-2) in the presence of the fluororesin (A) and a crosslinking agent (C) under melting condition.

A melting point of the fluorine-containing ethylenic polymer (a) is preferably 150° to 310°C.

It is preferable that the fluorine-containing ethylenic polymer (a) is at least one polymer selected from the group consisting of:
(a-1) a copolymer of tetrafluoroethylene and ethylene,
(a-2) a copolymer of tetrafluoroethylene and a perfluoro ethylenically unsaturated compound represented by the following formula (1):

   CF₂=CF-R_{f}¹ (1)

   wherein R_{f}¹ represents -CF₃ or -OR_{f}² and R_{f}² represents a perfluoroalkyl group having 1 to 5 carbon atoms,
(a-3) a copolymer comprising 19 to 90 % by mole of a tetrafluoroethylene unit, 9 to 80 % by mole of an ethylene unit and 1 to 72 % by mole of a perfluoro ethylenically unsaturated compound unit represented by the following formula (1):

   CF₂=CF-R_{f}¹ (1)

   wherein R_{f}¹ represents -CF₃ or -OR_{f}² and R_{f}² represents a perfluoroalkyl group having 1 to 5 carbon atoms, and
(a-4) polyvinylidene fluoride.

It is preferable that the crosslinking agent (C) is at least one kind selected from the group consisting of organic peroxides, polyamine compounds and polyhydroxy compounds.

The thermoplastic polymer composition preferably has a structure in which the fluororesin (A) forms a continuous phase and the crosslinked fluororubber (B) forms a dispersion phase.

The crosslinked fluororubber (B) preferably has an average particle size of the dispersed rubbers of 0.01 to 30 µm.

A ratio of melt viscosity of the fluororesin (A) and the fluororubber (b-1) or the fluorine-containing thermoplastic elastomer (b-2) is preferably 0.1 to 1.5.

A melt flow rate of the thermoplastic polymer composition is preferably 1 to 30 g/ 10 min.

A fuel permeability of the thermoplastic polymer composition is preferably 0.1 to 20 g · mm/m² · day.

The present invention relates to a molded article, a sealing material, peripheral parts of fuel system, a single layer fuel hose and a single layer fuel container comprising the above described thermoplastic polymer composition.

The present invention further relates to a multilayer fuel hose and a multilayer fuel container having a layer comprising the above described thermoplastic polymer composition.

### BEST MODE FOR CARRYING OUT THE INVENTION

The thermoplastic polymer composition used in the present invention comprises 10 to 95 % by weight of the fluororesin (A) and 90 to 5 % by weight of the crosslinked fluororubber (B), in which the fluororubber (A) comprises a fluorine-containing ethylenic polymer (a) having a melting point of 120° to 330°C and the crosslinked fluororubber (B) is a rubber obtained by dynamically crosslinking at least one kind of fluororubber (b-1) or a fluorine-containing thermoplastic elastomer (b-2) in the presence of the fluororesin (A) and the crosslinking agent (C) under melting condition.

The fluororesin (A) is an ethylene-tetrafluoroethylene copolymer (ETFE) comprising tetrafluoroethylene and ethylene,

ETFE is preferable from the viewpoint of low fuel permeability and flexibility in addition to the above described effects. A molar ratio of a tetrafluoroethylene unit and an ethylene unit is preferably 20:80 to 90: 10, more preferably 62:38 to 90: 10, particularly preferably 63:37 to 80:20. Also, the third component may be contained and kind of the third component is not particularly limited as long as it is copolymerizable with tetrafluoroethylene and ethylene. As the third components, monomers represented by the following formulas:

CH₂=CX³R_{f}³, CF₂=CFR_{f}³, CF₂=CFOR_{f}³ and CH₂=C(R_{f}³)₂

wherein X³ is a hydrogen atom or a fluorine atom, and R_{f}³ is a fluoroalkyl group, can be used, and of those, a fluorine-containing vinyl monomer represented by CH₂=CX³R_{f}³ is more preferable and a monomer in which R_{f}³ has 1 to 8 carbon atoms is particularly preferable.

Specific examples of the fluorine-containing vinyl monomer represented by the above formula are 1,1-dihydroperfluoropropene-1; 1,1 -dihydroperfluorobutene-1; 1,1,5-trihydroperfluoropentene-1; 1,1,7-trihydroperfluoroheptene-1; 1,1,2-trihydroperfluorohexene-1; 1,1,2-trihydroperfluorooctene-1; 2,2,3,3,4,4,5,5-octafluoropentyl vinyl ether; perfluoro(methyl vinyl ether); perfluoro(propyl vinyl ether); hexafluoropropene, perfluoro-butene-1; 3,3,3-trifluoro-2-trifluoromethylpropene-1; and 2,3,3,4,4,5,5-heptafluoro-1-pentene (CH₂=CFCF₂CF₂CF₂H).

A content of the third component is preferably 0.1 to 10 % by mole based on the fluorine-containing ethylenic polymer (a), more preferably 0.1 to 5 % by mole, and particularly preferably 0.2 to 4 % by mole.

The crosslinked fluororubber (B) used in the present invention is not particularly limited as long as at least one kind of fluororubber (b-1) or fluorine-containing thermoplastic elastomer (b-2) is cross-linked dynamically under melting condition.

Examples of the fluororubber (b-1) are, for instance, a perfluoro fluororubber, a non-perfluoro fluororubber and the like.

Examples of the perfluoro fluororubber are a tetrafluoroethylene (hereinafter referred to as TFE)/perfluoro(alkyl vinyl ether) (hereinafter referred to as PAVE) copolymer, a TFE/ hexafluoropropylene (hereinafter referred to as HFP) / PAVE copolymer and the like.

Examples of the non-perfluoro fluororubber are, for instance, a vinylidene fluoride (hereinafter referred to as VdF) polymer, a TFE/propylene copolymer and the like, and these can be used alone or in an optional combination thereof to an extent not to impair the effects of the present invention.

The perfluoro fluororubbers and the non-perfluoro fluororubbers exemplified above are shown by compositions of the main monomers, and a rubber in which a monomer for crosslinking and a modified monomer are copolymerized can also be favorably employed. As for a monomer for crosslinking and a modified monomer, known monomers for crosslinking such as monomers containing an iodine atom, a bromine atom and a double bond, a chain transfer agent, and modified monomers such as known ethylenically unsaturated compounds can be used.

Specific examples of the above described VdF polymers are a VdF/HFP copolymer, a VdF/TFE/HFP copolymer, a VdF/TFE/propylene copolymer, a VdF/ethylene/HFP copolymer, a VdF/TFE/PAVE copolymer, a VdF/PAVE copolymer, a VdF/chlorotrifluoroethylene (hereinafter referred to as CTFE) copolymer and the like. More specifically, preferable is a fluorine-containing copolymer comprising 25 to 85 % by mole of VdF and 75 to 15 % by mole of at least one kind of other monomer copolymerizable with VdF, and more preferable is a fluorine-containing copolymer comprising 50 to 80 % by mole of VdF and 50 to 20 % by mole of at least one kind of other monomer copolymerizable with VdF.

Herein, examples of at least one kind of other monomer copolymerizable with VdF are, for instance, fluorine-containing monomers such as TFE, CTFE, trifluoroethylene, HFP, trifluoropropylene, tetrafluoropropylene, pentafluoropropylene, trifluorobutene, tetrafluoroisobutene, PAVE and vinyl fluoride, and non-fluorine-containing monomers such as ethylene, propylene and alkyl vinyl ether. These can be used alone or in an optional combination thereof.

Of those fluororubbers, a fluororubber comprising a VdF unit is preferable from the viewpoint of heat resistance, compression set, processability and cost, and a fluororubber having a VdF unit and a HFP unit is more preferable from the viewpoint of excellent compression set.

At least one kind of rubber selected from the group consisting of a VdF/HFP fluororubber, a VdF/TFE/HFP fluororubber and a TFE/propylene fluororubber is preferable, and a VdF/TFE/HFP fluororubber is more preferable.

The fluorine-containing thermoplastic elastomer (b-2) is not particularly limited as long as it comprises at least one kind of elastomeric polymer segment (S1) and at least one kind of non-elastomeric polymer segment (S2), but at least either one of the elastomeric polymer segment (S1) and the non-elastomeric polymer segment (S2) is preferably a fluorine-containing polymer segment from the viewpoint of excellent compatibility with the fluororesin (A), and both of them are preferably fluorine-containing polymer segments. In this case, mold-processability of the thermoplastic polymer composition of the present invention can be expected to be enhanced, and a molded article obtained from the composition can be expected to have excellent tensile strength at break and tensile elongation at break.

The elastomeric polymer segment (S1) imparts flexibility to the polymer, and its glass transition point is not more than 25°C, preferably not more than 0°C. Examples of its component units are, for instance, perhalo olefins such as tetrafluoroethylene, chlorotrifluoroethylene, hexafluoropropylene and a perfluorovinyl ether represented by the formula (3):

CF₂=CFO(CF₂CFX⁴O)ₚ-(CF₂CF₂CF₂O)_{q}-R_{f}⁴ (3)

wherein X⁴ represents a fluorine atom or -CF₃, R_{f}⁴ represents a perfluoroalkyl group having 1 to 5 carbon atoms, p is 0 or an integer of 1 to 5, and q is 0 or an integer of 1 to 5; fluorine-containing monomers such as vinylidene fluoride, trifluoroethylene, trifluoropropylene, tetrafluoropropylene, pentafluoropropylene, trifluorobutene, tetrafluoroisobutene and vinyl fluoride; and non-fluorine-containing monomers such as ethylene, propylene and alkyl vinyl ether.

Examples of a monomer giving a cross-linking site are, for instance, an iodine- or bromine-containing monomer represented by the formula (4):

CX⁵₂=CX⁵-R_{f}⁵CHR¹X⁶ (4)

wherein X⁵ represents a hydrogen atom, a fluorine atom or -CH₃, R_{f}⁵ represents a fluoroalkylene group, a perfluoroalkylene group, a fluoropolyoxyalkylene group or a perfluoropolyoxyalkylene group, R¹ represents a hydrogen atom or -CH₃, and X⁶ represents an iodine atom or a bromine atom,
a monomer represented by the formula (5):

CF₂=CFO(CF₂CF(CF₃)O)ₘ(CF₂)ₙ-X⁷ (5)

wherein m is 0 or an integer of 1 to 5, n is an integer of 1 to 3, X⁷ represents a cyano group, a carboxyl group, an alkoxycarbonyl group, or a bromine atom, and the like, and these can be used alone or in an optional combination thereof.

Next, examples of component units of the non-elastomeric polymer segment (S2) are perhalo olefins such as tetrafluoroethylene, chlorotrifluoroethylene, perfluoro(alkyl vinyl ether), hexafluoropropylene, a compound represented by the formula (6):

CF₂=CF(CF₂)ᵣX⁸ (6)

wherein r is an integer of 1 to 10, X⁸ represents a fluorine atom or a chlorine atom, and perfluoro-2-butene; partly-fluorinated olefins such as vinylidene fluoride, vinyl fluoride, trifluoroethylene, a compound represented by the formula (7):

CH₂₌CX⁹-(CF₂)ₛ-X⁹ (7)

wherein X⁹ represents a hydrogen atom and a fluorine atom, and s is an integer of 1 to 10, and CH₂=C(CF₃)₂; and, non-fluorine-containing monomers such as ethylene, propylene, vinyl chloride, vinyl ether, vinyl carboxylate ester and an acrylic acid.

In addition, of these, preferable is the fluorine-containing thermoplastic elastomer (b-2) comprising a copolymer of tetrafluoroethylene, vinylidene fluoride and hexafluoropropylene as the elastomeric polymer segment (S1) and a copolymer of tetrafluoroethylene and ethylene as the non-elastomeric polymer segment (S2), and more preferable is the fluorine-containing thermoplastic elastomer (b-2) comprising tetrafluoroethylene/vinylidene fluoride/hexafluoropropylene as the elastomeric polymer segment (S1) in a ratio of 0 to 35/40 to 90/5 to 50 % by mole, and tetrafluoroethylene / ethylene as the non-elastomeric polymer segment (S2) in a ratio of 20 to 80/80 to 20 % by mole.

It is important that the fluorine-containing thermoplastic elastomer (b-2) is a fluorine-containing multi-segmented polymer in which the elastomeric polymer segment (S1) and the non-elastomeric polymer segment (S2) are bonded in a blocked or grafted state in one molecule. The fluorine-containing thermoplastic elastomer (b-2) more preferably comprises:
(1) a di-block polymer comprising one elastomeric polymer segment (S1) and one non-elastomeric polymer segment (S2), wherein either of them is a fluorine-containing polymer segment, and/or
(2) a tri-block polymer comprising one elastomeric polymer segment (S1) and two non-elastomeric polymer segments (S2), wherein at least either of them is a fluorine-containing polymer segment, and the elastomer particularly preferably comprises:
   (1) a di-block polymer comprising one elastomeric polymer segment (S1) and one non-elastomeric polymer segment (S2), wherein both of the polymer segments are fluorine-containing polymer segments, and/or
   (2) a tri-block polymer comprising one elastomeric polymer segment (S1) and two non-elastomeric polymer segments (S2), wherein all of them are fluorine-containing polymer segments.

For preparing the fluorine-containing thermoplastic elastomer (b-2), various known processes can be employed to obtain a fluorine-containing multi-segmented polymer by connecting the elastomeric polymer segment (S1) and the non-elastomeric polymer segment (S2) in a blocked or grafted state. Particularly, the process for preparing a block-type fluorine-containing multi-segmented polymer described in JP-B-58-4728 and the process for preparing a graft-type fluorine-containing multi-segmented polymer described in JP-A-62-34324 are preferably employed.

Particularly, from the viewpoint that a homogeneous and regular segmented polymer having high segmentation ratio (block ratio) can be obtained, preferable is the block-type fluorine-containing multi-segmented polymer synthesized by the so-called iodine transfer polymerization method described in JP-B-58-4728 and KOBUNSHI RONBUNSHU (Vol. 49, No. 10, 1992).

A preferable process for preparing the fluorine-containing thermoplastic elastomer (b-2) is an iodine transfer polymerization method which is known as a process for preparing a fluororubber. For example, there is a method of emulsion-polymerizing the above-mentioned perhalo olefin and when necessary, a monomer giving a cross-linking site in the presence of an iodine compound, preferably a diiodine compound in an aqueous medium under pressure while stirring in the presence of a radical initiator in a substantially oxygen-free atmosphere. A represented example of the diiodine compound to be used is represented by the formula (8):

R²IₓBr_{y} (8)

wherein x and y are 0 or integers of 1 to 2 and 1 ≤ x + y ≤ 2 is to be satisfied, R² is a saturated or unsaturated fluorohydrocarbon group or chlorofluorohydrocarbon group having 1 to 16 carbon atoms or a hydrocarbon group having 1 to 3 carbon atoms, which may contain an oxygen atom, and the elastomer can be obtained in the presence of this compound. The iodine or bromine that is introduced in this way functions as a cross-linking site.

Examples of the compound represented by the formula (8) are, for instance, 1,3-diiodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, monoiodomonobromo-substituted benzene, diiodomonobromo-substituted benzene and (2-iodoethyl)- and (2-bromoethyl)-substituted benzene. These may be used alone or can be used in a combination thereof.

Of these, from the viewpoint of polymerization reactivity, cross-linking reactivity and availability, 1,4-diiodoperfluorobutane and diiodomethane are preferably used.

The radical polymerization initiator used in the present invention may be the same as an initiator that has been used for polymerization of a fluorine-containing elastomer. Examples of such an initiator are organic and inorganic peroxides and azo compounds. Represented initiators are persulfates, percarbonates and peresters, and a preferable initiator is ammonium persulfate (APS). APS can be used alone or can be used in combination with reducing agents such as sulfites.

The emulsifier used for emulsion polymerization can be selected from a wide range, but from the viewpoint of inhibiting the chain transfer reaction to the emulsifier molecules that occurs during polymerization, salts of carboxylic acid having a fluorocarbon chain or a fluoropolyether chain are preferable. The amount of the emulsifier is preferably about 0.05 to 2 % by weight, particularly preferably 0.2 to 1.5 % by weight based on the added water.

The polymerization pressure can be varied in a wide range and is usually within the range of 0.5 to 5 MPa. The higher the polymerization pressure is, the higher the polymerization rate and therefore, from the viewpoint of improvement in productivity, the polymerization pressure is preferably not less than 0.8 MPa.

When the elastomeric polymer segment (S1) of the fluorine-containing thermoplastic elastomer (b-2) is prepared by the above described iodine transfer polymerization method, its number average molecular weight is preferably 3,000 to 750,000, more preferably 5,000 to 300,000 from the viewpoint of imparting flexibility, elasticity and mechanical properties to the obtained entire fluorine-containing multi-segmented polymer.

The terminal of the elastomeric polymer segment (S1) obtained in this way is a perhalo-type and has an iodine atom that is the initiation point for block copolymerization of the non-elastomeric polymer segment (S2).

Next, block copolymerization of the non-elastomeric polymer segment (S2) to the elastomeric polymer segment (S1) can be conducted subsequently to the emulsion polymerization of the elastomeric polymer segment (S1) by changing the monomer to those for the non-elastomeric polymer segment (S2). The number average molecular weight of the obtained non-elastomeric polymer segment (S2) is preferably 1,000 to 1,200,000, more preferably 3,000 to 600,000 from the viewpoint of imparting heat resistance and mechanical properties to the thermoplastic polymer composition of the present invention.

In the fluorine-containing thermoplastic elastomer (b-2), the amount of polymer molecules comprising the elastomeric polymer segments (S1) only, to which the non-elastomeric polymer segments (S2) are not bonded, is preferably not more than 20 % by weight, more preferably not more than 10 % by weight based on the total amount of polymer molecules and segments in the fluorine-containing thermoplastic elastomer (b-2).

It is preferable that the fluororubber (b-1) or the fluorine-containing thermoplastic elastomer (b-2) has an iodine atom or a bromine atom in its molecule, from the viewpoint that crosslinking using an organic peroxide can be carried out.

A weight ratio of the fluororesin (A) to the fluororubber (b-1) or the fluorine-containing thermoplastic elastomer (b-2) to be added to the fluororesin (A) is within a range preferably from 10/90 to 95/5, more preferably from 20/80 to 80/20. When the amount of the fluororubber (b-1) or the fluorine-containing thermoplastic elastomer (b-2) to be added to the fluororesin (A) is less than 5 % by weight, flexibility of the obtained thermoplastic polymer composition tends to be lowered, and when more than 90 % by weight, there is a tendency that flowability of the obtained thermoplastic polymer composition becomes poor and mold-processability is lowered.

The thermoplastic polymer composition used in the present invention is obtained by dynamically crosslinking at least one kind of fluororubber (b-1) or the fluorine-containing thermoplastic elastomer (b-2) under melting condition in the presence of the fluororesin (A) and the crosslinking agent (C). Herein, dynamically cross-linking means cross-linking the fluororubber (b-1) or the fluorine-containing thermoplastic elastomer (b-2) dynamically by using a banbury mixer, a pressurizing kneader, an extruder or the like at the same time as melt-kneading. Of these, an extruder such as a twin screw extruder is preferable from the viewpoint that high shear strength can be applied. By treating with cross-linking dynamically, the phase structure of the fluororesin (A) and the crosslinked fluororubber (B) can be controlled.

The crosslinking agent (C) can be selected optionally depending on kind of the fluororubber (b-1) or the fluorine-containing thermoplastic elastomer (b-2) and melt-kneading conditions.

A crosslinking system that is used in the present invention can be optionally selected depending on kind of a crosslinkable group (cure site) or uses of the obtained molded article, when the fluororubber (b-1) or fluorine-containing thermoplastic elastomer (b-2) has a crosslinkable group (cure site). Any of polyol crosslinking system, organoperoxide crosslinking system and polyamine crosslinking system can be adopted as the crosslinking system.

Herein, crosslinking by the polyol crosslinking system is suitable because of features that a carbon-oxygen bond is contained at a crosslinking site, compression set is small, and moldability and sealing properties are excellent.

When crosslinking by the organoperoxide crosslinking system, since a carbon-carbon bond is contained at a crosslinking site, there are features that chemical resistance and steam resistance are excellent as compared with the polyol crosslinking system having a carbon-oxygen bond at a crosslinking site and the polyamine crosslinking system having a carbon-nitrogen double bond at a crosslinking site.

When crosslinking by the polyamine crosslinking system, a carbon-nitrogen double bond is contained at a crosslinking site, and there is a feature that dynamic mechanical properties are excellent. However, compression set tends to become large as compared with the cases of crosslinking by using crosslinking agent of polyol crosslinking system and organoperoxide crosslinking system.

Therefore, in the present invention, it is preferable to use a crosslinking agent for polyol crosslinking system or organoperoxide crosslinking system, and it is more preferable to use a crosslinking agent for polyol crosslinking system from the viewpoint of excellent sealing properties as descried above.

A crosslinking agent for polyamine, polyol or organoperoxide crosslinking system can be used for the present invention.

Examples of the polyamine crosslinking agent are, for instance, polyamine compounds such as hexamethylenediamine carbamate, N,N'-dicinnamylidene-1,6-hexamethylenediamine and 4,4'-bis(aminocyclohexyl)methane carbamate. Of those, N,N'-dicinnamylidene-1,6-hexamethylenediamine is preferable.

Compounds known as a crosslinking agent for fluororubbers can be used as a polyol crosslinking agent, and, for example, polyhydroxy compounds, specifically, polyhydroxy aromatic compounds are suitably used from the viewpoint of excellent heat resistance.

The above mentioned polyhydroxy aromatic compound is not particularly limited, and examples thereof are, for instance, 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenylketone, tri(4-hydroxyphenyl)methane, 3,3',5,5'-tetrachlorobisphenol A, 3,3',5,5'-tetrabromobisphenol A and the like. These polyhydroxy aromatic compounds may be alkali metal salts, alkali earth metal salts etc., but when a copolymer is coagulated by using an acid, it is preferable not to use the above mentioned metal salts.

A crosslinking agent for organoperoxide crosslinking system may be an organic peroxide which can generate peroxy radicals easily in the presence of heat or oxidation-reduction system, and examples are, for instance, 1,1-bis(t-butylperoxy)-3,5,5-trimethylcyclohexane, 2,5-dimethylhexane-2,5-dihydroperoxide, di-t-butylperoxide, t-butylcumylperoxide, dicumylperoxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoylperoxide, t-butylperoxybenzene, t-butylperoxy maleic acid, t-butylperoxyisopropyl carbonate and the like. Of those, 2,5-dimethyl-2,5-di(t-butylperoxy)hexane and 2,5-dimethyl-2,5-di(t-butylperoxy)-hexyne-3 are preferable.

Among those, polyhydroxy compounds are preferable from the viewpoint that compression set of the obtained molded article etc. is small, and moldability and sealing properties are excellent, and polyhydroxy aromatic compounds are more preferable from the viewpoint that heat resistance is excellent, and bisphenol AF is further preferable.

In the polyol crosslinking system, a crosslinking accelerator is generally used along with a polyol crosslinking agent. When using the crosslinking accelerator, a crosslinking reaction can be accelerated by accelerating formation of a double bond in a molecule in a reaction of removing hydrofluoric acid at a trunk chain of a fluororubber.

As for the crosslinking accelerator in the polyol crosslinking system, onium compounds are generally employed. Onium compounds are not particularly limited, and examples thereof are, for instance, ammonium compounds such as quaternary ammonium salts, phosphonium compounds such as quaternary phosphonium salts, oxonium compounds, sulfonium compounds, cyclic amine and monofunctional amine compounds. Of those, quaternary ammonium salts and quaternary phosphonium salts are preferable.

Quaternary ammonium salts are not particularly limited, and examples thereof are, for instance, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methyl sulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter referred to as DBU-B), 8-benzyl-1,8-diazabicyclo[5.4.0]-7-undecenium hydroxide, 8-phenethyl-1,8-diazabicyclo[5.4.0]-7-undecenium chloride, 8-(3-phenylpropyl)-1,8-diazabicyclo[5.4.0]-7-undecenium chloride and the like. Of those, DBU-B is preferable from the viewpoint of crosslinkability and physical properties of a cross-linked article.

Quaternary phosphonium salts are not particularly limited, and examples thereof are, for instance, tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, benzylphenyl(dimethylamino)phosphonium chloride and the like. Of those, benzyltriphenylphosphonium chloride (BTPPC) is preferable from the viewpoint of crosslinkability and physical properties of a crosslinked article.

In addition, a solid solution of quaternary ammonium salts or quaternary phosphonium salts and bisphenol AF, and a chlorine-free crosslinking accelerator disclosed in JP-A-11-147891 can be employed as a crosslinking accelerator.

Examples of a crosslinking accelerator for an organoperoxide crosslinking system are, for instance, triallylcyanurate, triallylisocyanurate(TAIC), triacrylformal, triallyl trimellitate, N,N'-m-phenylenebismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallylphosphoramide, N,N,N',N'-tetraallylphthalamide, N,N,N',N'-tetraallylmaronamide, trivinylisocyanurate, 2, 4, 6-trivinylmethyltrisiloxane, tri(5-norbomene-2-methylene)cyanurate, triallylphosphite and the like. Among those, triallylisocyanurate (TAIC) is preferable from the viewpoint of crosslinkability and physical properties of a crosslinked article.

An amount of the crosslinking agent (C) is preferably 0.1 to 10 parts by weight based on 100 parts by weight of the fluororubber (b-1) or the fluorine-containing thermoplastic elastomer (b-2), and more preferably 0.3 to 5 parts by weight. When the amount of the crosslinking agent (C) is less than 0.1 part by weight, crosslinking of the fluororubber (b-1) or the fluorine-containing thermoplastic elastomer (b-2) is not sufficiently facilitated, and heat resistance and oil resistance of the obtained thermoplastic polymer composition tends to decrease, and when more than 10 parts by weight, moldability of the obtained thermoplastic polymer composition tends to decrease.

Under melting condition means under a temperature where the fluororesin (A) and the fluororubber (b-1) or the fluorine-containing thermoplastic elastomer (b-2) are melted. The melting temperature varies depending on glass transition temperatures and/or melting points of the respective fluororesin (A) and fluororubber (b-1) or the fluorine-containing thermoplastic elastomer (b-2), and is preferably 120° to 330°C, more preferably 130° to 320°C. When the temperature is less than 120°C, dispersion between the fluororesin (A) and the fluororubber (b-1) or the fluorine-containing thermoplastic elastomer (b-2) tends to be rough, and when more than 330°C, the fluororubber (b-1) or the fluorine-containing thermoplastic elastomer (b-2) tends to deteriorate with heat.

The obtained thermoplastic polymer composition can have a structure in which the fluororesin (A) forms a continuous phase and the crosslinked fluororubber (B) forms a dispersion phase, or a structure in which the fluororesin (A) and the crosslinked fluororubber (B) form a co-continuous phase. Of these, it is preferable for the composition to have a structure in which the fluororesin (A) forms a continuous phase and the crosslinked fluororubber (B) forms a dispersion phase.

Even when the fluororubber (b-1) or the fluorine-containing thermoplastic elastomer (b-2) forms a matrix at an initial stage of dispersion, a melt-viscosity is increased because the fluororubber (b-1) or the fluorine-containing thermoplastic elastomer (b-2) becomes the crosslinked fluororubber (B) with progress of the crosslinking reaction, and as a result, the crosslinked fluororubber (B) becomes a dispersion phase, or forms a co-continuous phase together with the fluororesin (A).

When such a structure is formed, the thermoplastic polymer composition of the present invention exhibits excellent heat resistance, chemical resistance and oil resistance and has excellent moldability. In that case, an average particle size of the dispersed rubbers of the crosslinked fluororubber (B) is preferably 0.01 to 30 µm, more preferably 0.1 to 10 µm. When the average particle size is less than 0.01 µm, flowability tends to lower, and when more than 30 µm, strength of the obtained thermoplastic polymer composition tends to decrease.

An average particle size of the dispersed rubbers of the crosslinked fluororubber (B) in the thermoplastic polymer composition of the present invention can be confirmed by any of AFM, SEM or TEM, or by a combination thereof: For example, in the case of using AFM, the difference obtained from the surface information of the fluororesin (A) of a continuous phase and the crosslinked fluororubber (B) of a dispersion phase is obtained as an image of contrast, and it is possible to binarize tone-categorizing of the tone. Images having clear contrast can be obtained by regarding a center position of tone-categorizing as the binarizing position. The particle size of the crosslinked rubbers in the dispersion phase can be measured. In the case of using SEM, a particle size of the crosslinked rubbers in the dispersion phase can be measured by processing images with emphasizing contrast, controlling tone, or a combination thereof in such a way that the crosslinked fluororubber (B) in the dispersion phase becomes clear against the images obtained by reflection electron image like the case of AFM. In the case of TEM, a particle size of the crosslinked rubbers in the dispersion phase can be measured by processing images with emphasizing contrast, controlling tone, or a combination thereof like the cases of AFM and SEM. More suitable method can be selected from these methods depending on the respective thermoplastic polymer compositions.

On the other hand, in the thermoplastic polymer composition used in the present invention, a ratio of a melt viscosity of the fluororesin (A) to a melt viscosity of the fluororubber (b-1) or the fluorine-containing thermoplastic elastomer (b-2) ([melt viscosity of fluororesin (A)]/[melt viscosity of rubber (b-1) or elastomer (b-2)]) is preferably 0.1 to 1.5, more preferably 0.2 to 1.2, particularly preferably 0.3 to 1.1. When such a melt viscosity ratio is less than 0.1 and more than 1.5, there is a tendency that an average particle size of dispersed rubbers of the crosslinked fluororubber (B) is increased and dispersion becomes non-uniform. When the melt viscosity ratio of the fluororesin (A) to the fluororubber (b-1) or the fluorine-containing thermoplastic elastomer (b-2) is 0.1 to 1.5, since the average particle size of dispersed rubbers of the crosslinked fluororubber (B) becomes fine and dispersion becomes uniform, a thermoplastic polymer composition having excellent flexibility, compression set and mold-processability can be obtained. The melt viscosity indicates a value of melt flow rate measured under the conditions of a temperature of 297°C and a load of 5,000 g.

The preferred embodiment of the thermoplastic polymer composition used in the present invention is the structure in which the fluororesin (A) forms a continuous phase and the crosslinked fluororubber (B) forms a dispersion phase. Also, a co-continuous phase of the fluororesin (A) with the crosslinked fluororubber (B) may be contained in the structure partly.

The thermoplastic polymer composition used in the present invention comprises 10 to 95 % by weight of the fluororesin (A) and 90 to 5 % by weight of the crosslinked fluororubber (B), and it is preferable that the fluororesin (A) is 20 to 80 % by weight, and the crosslinked fluororubber (B) is 80 to 20 % by weight, and more preferably the fluororesin (A) is 30 to 70 % by weight, and the crosslinked fluororubber (B) is 70 to 30 % by weight. When the fluororesin (A) is less than 10 % by weight, flowability of the obtained thermoplastic polymer composition becomes poor and moldability tends to lower, and when more than 95 % by weight, flexibility of the obtained thermoplastic polymer composition tends to decrease.

A melt flow rate (MFR) of the thermoplastic polymer composition used in the present invention is preferably 0.5 to 30 g/10 min, more preferably 1 to 25 g/10 min. When MFR is less than 0.5 g/10 min, flowability becomes poor and moldability tends to decrease. The measurement of MFR was carried out by using a melt flow rate measurement device made by Toyo Seiki Seisaku-sho, Ltd. under the conditions of 297°C and a load of 5,000 g.

Considering utilizing for peripheral parts of fuel system, the thermoplastic polymer composition of the present invention preferably has fuel permeability of 0.1 to 20 g · mm/m² · day, more preferably 0.2 to 18 g - mm/m² · day. The measurement of fuel permeability was carried out by employing CE 10 (toluene/isooctane/ethanol=45/45/10 vol%) as an imitation fuel with the Cup method.

Also, to the thermoplastic polymer composition used in the present invention, polymers such as polyethylene, polypropylene, polyamide, polyester and polyurethane, inorganic fillers such as calcium carbonate, talc, clay, titanium oxide, carbon black and barium sulfate, a pigment, a flame retardant, a lubricant, a photo-stabilizer, a weather resistance stabilizer, an antistatic agent, an ultraviolet absorber, an antioxidant, a mold-releasing agent, a foaming agent, aroma chemicals, oils, a softening agent, etc. can be added to an extent not to affect the effect of the present invention.

The thermoplastic polymer composition used in the present invention can be molded by using a general molding process and molding device. As for molding processes, optional processes, for example, injection molding, extrusion molding, compression molding, blow molding, calendar molding and vacuum molding can be adopted, and the thermoplastic polymer composition of the present invention is molded into a molded article in an optional shape according to an intended purpose.

The present invention relates to the molded article obtained by using the thermoplastic polymer composition as described above, and the molded article encompasses a molded article in the form of sheet or film, and also a laminated article having a layer comprising the thermoplastic polymer composition of the present invention and a layer comprising other material.

In the laminated article having at least one layer comprising the thermoplastic polymer composition of the present invention and at least one layer comprising other material, appropriate material may be selected as the other material according to required properties and intended applications. Examples of the other material are, for instance, thermoplastic polymers such as polyolefin (for instance, high-density polyethylene, middle-density polyethylene, low-density polyethylene, linear low-density polyethylene, ethylene-propylene copolymer and polypropylene), nylon, polyester, vinyl chloride resin (PVC) and vinylidene chloride resin (PVDC), crosslinked rubbers such as ethylene-propylene-diene rubber, butyl rubber, nitrile rubber, silicone rubber and acrylic rubber, metals, glass, wood, ceramics, etc.

In the molded article having a laminated structure, a layer of an adhesive agent may be inserted between the layer comprising the thermoplastic polymer composition of the present invention and the substrate layer comprising other material. The layer comprising the thermoplastic polymer composition of the present invention and the substrate layer comprising other material can be adhered strongly and integrated by inserting a layer of an adhesive agent. Examples of the adhesive agent used in the layer of the adhesive agent are a diene polymer modified with acid anhydride; a polyolefin modified with acid anhydride; a mixture of a high molecular weight polyol (for example, polyester polyol obtained by polycondensation of a glycol compound such as ethylene glycol or propylene glycol with a dibasic acid such as adipic acid; a partly-saponified compound of a copolymer of vinyl acetate and vinyl chloride; or the like) and a polyisocyanate compound (for example, a reaction product of a glycol compound such as 1,6-hexamethylene glycol and a diisocyanate compound such as 2,4-tolylene diisocyanate in a molar ratio of 1 to 2; a reaction product of a triol compound such as trimethylolpropane and a diisocyanate compound such as 2,4-tolylenediisocyanate in a molar ratio of 1 to 3; or the like); and the like. Also, known processes such as co-extrusion, co-injection and extrusion coating can be used for forming a laminated structure.

The present invention encompasses a fuel hose or a fuel container comprising a single layer of the thermoplastic polymer composition of the present invention. The use of the fuel hose is not particularly limited, and examples thereof are, for instance, a filler hose, an evaporation hose and a breezer hose for an automobile. The use of the fuel container is not particularly limited, and examples thereof are, for instance, a fuel container for an automobile, a fuel container for a two-wheel vehicle, a fuel container for a small electric generator, a fuel container for lawn mower and the like.

Also, the present invention encompasses a multilayer fuel hose or a multilayer fuel container comprising a layer of the thermoplastic polymer composition of the present invention. The multilayer fuel hose or the multilayer fuel container comprises the layer comprising the thermoplastic polymer composition of the present invention and at least one layer comprising the other material, and these layers are mutually adhered through or without the layer of the adhesion layer.

Examples of the layer of the other material are a layer comprising a rubber other than the thermoplastic polymer composition of the present invention and a layer comprising the thermoplastic resin.

Examples of the rubber are preferably at least one rubber selected from the group consisting of an acrylonitrile-butadiene rubber or a hydrogenated rubber thereof, a blend rubber of acrylonitrile-butadiene rubber and polyvinyl chloride, a fluororubber, an epichlorohydrin rubber and an acrylic rubber from the viewpoint of chemical resistance and flexibility. It is more preferable that the rubber is at least one rubber selected from the group consisting of an acrylonitrile-butadiene rubber or a hydrogenated rubber thereof, a blend rubber of acrylonitrile-butadiene rubber and polyvinyl chloride and a fluororubber.

The thermoplastic resin is preferably a thermoplastic resin comprising at least one selected from the group consisting of a fluororesin, a polyamide resin, a polyolefin resin, a polyester resin, a poly(vinyl alcohol) resin, a polyvinyl chloride resin and a poly(phenylene sulfide) resin from the viewpoint of fuel barrier property. It is more preferable that the thermoplastic resin is a thermoplastic resin comprising at least one selected from the group consisting of a fluororesin, a polyamide resin, a poly(vinyl alcohol) resin and a poly(phenylene sulfide) resin.

The fuel hose or the fuel container comprising a layer of the above described thermoplastic polymer composition of the present invention and a layer of other rubber or other thermoplastic resin is not particularly limited, and examples thereof are fuel hoses such as a filler hose, an evaporation hose and a breezer hose for an automobile; and fuel containers such as a fuel container for an automobile, a fuel container for a two-wheel vehicle, a fuel container for a small electric generator and a fuel container for lawn mower.

Among these, preferable as a fuel hose comprising a layer of the thermoplastic polymer composition of the present invention and a layer of the other rubber are a fuel hose composed of three layers of an outer layer comprising an acrylonitrile-butadiene rubber or a hydrogenated rubber thereof, or a blend rubber of acrylonitrile-butadiene rubber and polyvinyl chloride, a middle layer comprising the thermoplastic polymer composition of the present invention and an inner layer comprising a fluororubber, or a fuel hose composed of two layers of an outer layer comprising an acrylonitrile-butadiene rubber or a hydrogenated rubber thereof, or a blend rubber of acrylonitrile-butadiene rubber and polyvinyl chloride, and an inner layer comprising the thermoplastic polymer composition of the present invention from the viewpoint of excellent fuel barrier property, flexibility and chemical resistance.

The thermoplastic polymer composition as described above and the molded article obtained from the composition are suitably employed in the fields described below.

In the semiconductor-related field such as a semiconductor manufacturing device, a liquid crystal panel manufacturing device, a plasma panel manufacturing device, a plasma address liquid crystal panel, a field emission display panel and a substrate of a solar battery, examples of applications are an O (square) ring, a packing, a sealing material, a tube, a roll, a coating, a lining, a gasket, a diaphragm and a hose, and these can be used for a CVD device, a dry etching equipment, a wet etching equipment, an oxidization dispersion diffuser, a sputtering equipment, an ashing equipment, a wet scrubber, an ion implanter, an exhauster, a chemical piping and a gas piping. Specific examples of the applications are an O-ring and sealing material for a gate valve, an O-ring and a sealing material for a quartz window, an O-ring and sealing material for a chamber, an O-ring and a sealing material for a gate, an O-ring and a sealing material for a bell jar, an O-ring and a sealing material for a coupling, an O-ring, a sealing material and a diaphragm for a pump, an O-ring and sealing material for a semiconductor gas regulator, an O-ring and sealing material of a resist developing solution and a releasing solution, a hose and a tube for a wafer washing solution, a roll for a wafer transport, a lining and a coating for a resist developing solution vessel and a releasing solution vessel, a lining and a coating for a wafer washing vessel or a lining and a coating for a wet etching vessel. Furthermore, examples of uses thereof are a sealant, sealing agent, a coating of quartz for an optical fiber, a potting, a coating and an adhesive seal for an electronic parts and a circuit board for the purpose of insulation, vibration proof, water proof and damp proof, a gasket for magnetic storage, a modifier for a sealant material such as epoxy and a sealant for a clean room and clean facility.

In the field of automobiles, a gasket, a shaft seal, a valve stem seal, a sealing material or a hose can be employed for an engine and its peripheral equipment, a hose and a sealing material can be used for an AT equipment, and an O (square) ring, a tube, a packing, a core material of a valve, a hose, a sealing material and a diaphragm can be employed for a fuel system and its peripheral equipment. Concretely, examples are an engine head gasket, a metal gasket, a sump gasket, a crank shaft seal, a cam shaft seal, a valve stem seal, a manifold packing, an oil hose, a seal for an oxygen sensor, an ATF hose, an injector O-ring, an injector packing, a fuel pump O-ring, a diaphragm, a fuel hose, a crank shaft seal, a gear box seal, a power piston packing, a seal for a cylinder liner, a seal for a valve stem, a front pump seal of an automatic gear, a rear axle pinion seal, a gasket of an universal joint, a pinion seal of a speedometer, a piston cup of a foot brake, an O-ring of torque transmission, an oil seal, a seal for an exhaust gas reheating equipment, a bearing seal, an EGR tube, a twin carburetor tube, a diaphragm for the sensor of a carburetor, a vibration-proof rubber (an engine mount, an exhaust outlet), a hose for a reheating equipment, and an oxygen sensor bush.

In the field of aircraft, rockets and, ships and vessels, examples are a diaphragm, an O (square) ring, a valve, a tube, a packing, a hose and a sealing material, and these can be employed for a fuel system. Concretely, in the field of an aircraft, there are a jet engine valve stem seal, a fuel feeding hose, a gasket and an O-ring, a rotating shaft seal, a gasket of a hydraulic machine and a seal for a fire resisting wall, and in the field of ships and vessels, there are a stern seal for a propeller shaft of a screw, a suction and exhaust valve stem seal for a diesel engine, a valve seal of a butterfly valve, and a stem seal for a butterfly valve.

In the field of chemical products in a chemical plant, examples are a lining, a valve, a packing, a roll, a hose, a diaphragm, an O (square) ring, a tube, a sealing material and a chemical resistance coating, and these can be employed for processes of manufacturing chemicals such as medicine, agricultural chemicals, coating and resin. Concretely, examples are a seal of a pump for chemicals, a flow indicator and a pipe, a seal of heat exchanger, a packing for a glass condenser of sulfuric acid manufacturing equipment, a seal of an agricultural chemicals dusting machine and transport pump, a seal of gas piping, a seal for a plating solution, a packing of a high temperature vacuum dryer, a roller seal of a belt for paper making, a seal of a fuel battery, a joint seal of air duct, a trichlene resistance roll (for fiber dyeing), an acid resistance hose (for concentrated sulfuric acid), a packing of a tube connecting part of gas chromatography and a pH meter, a chloride gas transport hose, a rain water drain hose of a benzene or toluene storage tank, and a seal, a tube, a diaphragm and a valve of an analytical equipment and a physical and chemical equipment.

In the field of chemicals such as medical drugs, the molded article of the present invention can be employed as a plug for chemicals.

In the field of photography such as a developing equipment, in the field of printing such as printing machinery, and in the field of coating such as coating facility, examples are rolls, and each of them can be employed as a roll for a film developing machine and X-ray film developing machine, a printing roll and coating roll. Concretely, examples are a developing roll of a film developing machine and X-ray film developing machine, a gravure roll and a guide roll of a printing roll, a gravure roll of a coating roll of a magnetic tape manufacture coating line, a guide roll of a magnetic tape manufacture coating line, and various coating rolls. Furthermore, examples are a seal of a xerography machine, a printing roll, a scraper, a tube and a part of a valve of a printing equipment, a coating roll, a scraper, a tube, and a part of a valve of coating facility, an ink tube, a roll and a belt of a printer, a belt and a roll of a xerography machine, and a roll and a belt of a printing machine.

Also, a tube can be used in the field of analytical equipment and physical and chemical equipment.

In the field of food plants, examples are a lining, a valve, a packing, a roll, a hose, a diaphragm, an O (square) ring, a tube, a sealing material and a belt, and these can be used in a process of manufacturing food. Concretely, these are used as a seal for a plate heat exchanger and a seal of an electromagnetic valve for a vending machine.

In the field of atomic power plant equipment, examples are a packing, an O-ring, a hose, a sealing material, a diaphragm, a valve, a roll and a tube.

In the field of steel making such as an iron plate processing facility, an example is a roll which is used as a roll for an iron plate processing and the like.

In the field of general industries, examples are a packing, an O-ring, a hose, a sealing material, a diaphragm, a valve, a roll, a tube, a lining, a mandrel, an electric cable, a flexible joint, a belt, a rubber plate, a weather strip, and a roll, a roll blade and a belt for a PPC copying machine. Concretely, there are a seal of a hydraulic lubricating machine, a bearing seal, a seal for a window and other parts of a dry cleaning equipment, a seal for an uranium hexafluoride condenser, a sealing (vacuum) valve for a cyclotron, a seal for an automatic packaging machine, a diaphragm for a pump for analyzing a sulfurous acid gas and chlorine gas (a pollution-related measuring device), a roll, a belt and a squeezing roll for acid cleaning of a printing machine.

In the field of electricity, concretely, examples are an insulating oil cap for a bullet train, a benching seal for a liquid ring transformer, and a jacket for an oil well cable.

In the field of fuel batteries, concretely, examples are a sealing material between an electrode and a separator, and a seal for a hydrogen oxygen and purified water piping.

In the field of electronic components, specific examples are a starting material of a heat releasing material, a starting material of an electromagnetic waves shield material, a modifier for a print circuit board pre-preg plastic such as an epoxy, a scatter-proof material such as a bulb, and a gasket for a hard disc drive of a computer.

Products usable for molding application at site are not particularly limited, and examples are a coating agent of metal gasket for an automobile engine, a gasket of an oil pan of engine, a roll for a copying machine and a printer, a sealing agent for architecture, a gasket of a magnetic recording device, a sealing agent of a filter unit for a clean room, a coating agent of a printing substrate, a fixing agent of electrical and electronic parts, insulating moisture-proof treatment of a lead wire terminal of electric devices, a seal of an oven such as electric furnace, terminal treatment of a sheathed heater, widow frame seal of a microwave oven, adhesion of CRT wedge and neck, adhesion for installation of automobile electric equipment, and a joint seal of kitchen, bath room, a rest room, etc.

The molded article of the present invention can be suitably used in various applications descried above, and particularly suitable for peripheral parts of fuel system. The molded article of the present invention is useful particularly as a sealing material, a packing, a roller, a tube or a hose.

### EXAMPLES

Then, the present invention is explained by means of Examples, but is not limited thereto.

### <Hardness>

The pellets of the thermoplastic polymer composition prepared in Examples and Comparative Examples are compression-molded by a thermal pressing machine under the conditions of 260°C and 5 MPa to prepare 2 mm thick sheet-like test pieces, and a hardness A is measured by employing those sheets, according to JIS-K6301.

### <Flowability>

A melt-flow rate (MFR) is measured by a melt-flow measurement device under the conditions of 297°C and a load of 5,000 g by employing the pellets of the thermoplastic polymer compositions prepared in Examples and Comparative Examples.

### <Compression set>

The pellets of the thermoplastic polymer composition prepared in Examples and Comparative Examples are compression-molded by a thermal pressing machine under the conditions of 260°C and 5 MPa to prepare 2 mm and 0.7 mm thick sheet-like test pieces. Those sheet-like test pieces are overlapped to form a column having a diameter of 29.0 mm and a thickness of 12.7 mm and compression set is measured after allowing to stand under the conditions of a temperature of 150°C and a compression deformation amount of 25 % for 22 hours, according to JIS-K6301.

### <Tensile strength at break and tensile elongation at break>

The pellets of the thermoplastic polymer composition prepared in Examples and Comparative Examples are compression-molded by a thermal pressing machine under the condition of 260°C and 5 MPa to prepare 2 mm thick sheet-like test pieces, and then, the test pieces are cut into a shape of dumbbell with a thickness of 2 mm and a width of 5 mm. By employing the obtained dumbbell-shaped test pieces, tensile strength at break and tensile elongation at break at 23°C are measured by using an Autograph (made by SHIMADZU CORPORATION) under the condition of 50 mm/ min, according to JIS-K6301.

### <Fuel permeability>

The pellets of the thermoplastic polymer composition prepared in Examples and Comparative Examples are compression-molded by a thermal pressing machine under the condition of 260°C and 5 MPa to prepare 2 mm thick sheet-like test pieces. The sheet-like test pieces are cut into disk-like sheets having a diameter of 10 cm, and a permeation amount of CE10 (toluene/isooctane/ethanol=45/45/10 vol%) at 40°C is measured by Cup method, according to JIS-Z0208.

### <Fluorine-containing ethylenic polymer (a)>

Tetrafluoroethylene-ethylene copolymer (TFE:ET=50:50 % by mole, melting point: 220°C, MFR at 297°C at a load of 5,000 g: 30 g/ 10 min).

### <Fluororubber (b-1α)>

Two-component rubber comprising vinylidene fluoride (VdF) and hexafluoropropylene (HFP) (VdF:HFP=78:22 % by mole, Mooney viscosity at 121°C: 41, MFR at 297°C at a load of 5,000 g: 28 g/10 min).

### <Fluorine-containing thermoplastic elastomer (b-2)>

Tri-block copolymer comprising (tetrafluoroethylene-ethylene copolymer segment)-(vinylidene fluoride-tetrafluoroethylene-hexafluoropropylene copolymer segment)-(tetrafluoroethylene-ethylene copolymer segment) (MFR at 297°C at a load of 5,000 g: 26 g/ 10 min).

A ratio of tetrafluoroethylene and ethylene in the tetrafluoroethylene-ethylene copolymer segment is 50:50 % by mole.

A ratio of vinylidene fluoride, tetrafluoroethylene and hexafluoropropylene in the vinylidene fluoride-tetrafluoroethylene-hexafluoropropylene copolymer segment is 50:30:20 % by mole.

### <Fluororubber (b-1β)>

Three-component rubber comprising vinylidene fluoride (VdF), tetrafluoroethylene (TFE) and hexafluoropropylene (HFP) (VdF:TFE:HFP=50:20:30 % by mole, Mooney viscosity at 121°C: 88, MFR at 297°C at a load of 5,000 g: 87 g/ 10 min).

### <Crosslinking agent (C-1)>

Polyol crosslinking agent: 2,2-bis(4-hydroxyphenyl)perfluoropropane ("Bisphenol AF" available from DAIKIN INDUSTRIES, LTD.).

### <Crosslinking agent (C-2)>

Organoperoxide crosslinking agent: 2,5-dimethyl-2,5-bis(t-butylperoxy)hexyne-3 ("Perhexyn 25B-40" available from NOF Corporation).

### EXAMPLES 1 to 3

2.17 Parts by weight of the crosslinking agent (C-1) and 0.43 part by weight of a crosslinking accelerator (benzyltriphenylphosphonium chloride: "TPP-ZC" available from Hokko Chemical Industrial Co., Ltd.) based on 100 parts by weight of the above described fluororubber (b-1α) were kneaded with two rolls to produce a compound of fluororubber (b-1α).

Subsequently, after pre-mixing the above described fluorine-containing ethylenic polymer (a) and the compound of fluororubber (b-1α) in a ratio shown in Table 1, 3 parts by weight of an acid acceptor (magnesium oxide "MA150" available from Kyowa Chemical Industrial Co., Ltd.) and 6 parts by weight of an accelerator (calcium hydroxide "Cardic2000" available from Ohmi Chemical Industry Co., Ltd.) based on 100 parts by weight of the fluororubber (b-1α) in the above described compound were further blended. The mixture was supplied to a twin screw extruder and subjected to melt-kneading under the conditions of a cylinder temperature of 250°C and the rotation speed of a screw of 300 rpm to produce pellets of the respective thermoplastic polymer compositions. Hardness, flowability, compression set, tensile strength, tensile elongation and fuel permeability were measured according to the above described methods by using the obtained pellets of the respective thermoplastic polymer compositions, and the results are shown in Table 1.

### EXAMPLES 4 and 5

The above-described fluorine-containing ethylenic polymer (a), fluorine-containing thermoplastic elastomer (b-2) and crosslinking agent (C-2) were pre-mixed in amounts shown in Table 1, and then the mixture was supplied in a twin screw extruder and melt-kneaded under the conditions of a cylinder temperature of 250°C and a rotation speed of a screw of 300 rpm to prepare pellets of the respective thermoplastic polymer compositions. By employing the obtained pellets of thermoplastic polymer compositions, hardness, flowability, compression set, tensile strength, tensile elongation and fuel permeability were measured according to the above methods, and the results are shown in Table 1.

### EXAMPLES 6 to 8

2.0 Parts by weight of the crosslinking agent (C-1) and 0.55 part by weight of a crosslinking accelerator (8-benzyl-1,8-diazabicyclo[5,4,0]-7-undecenium chloride: "DBU-B" available from Wako Pure Chemical Industries, Ltd.) based on 100 parts by weight of the above described fluororubber (b-1β) were kneaded with two rolls to produce a compound of fluororubber (b-1β).

Subsequently, after pre-mixing the above described fluorine-containing ethylenic polymer (a) and the compound of fluororubber (b-1β) in a ratio shown in Table 1, 3 parts by weight of an acid acceptor (magnesium oxide "MA150" available from Kyowa Chemical Industrial Co., Ltd.) and 6 parts by weight of an accelerator (calcium hydroxide "Cardic2000" available from Ohmi Chemical Industry Co., Ltd.) based on 100 parts by weight of the fluororubber (b-1β) in the above described compound were further blended. The mixture was supplied in a twin screw extruder and melt-kneaded under the conditions of a cylinder temperature of 250°C and the rotation speed of a screw of 300 rpm to produce pellets of the respective thermoplastic polymer compositions. Hardness, flowability, compression set, tensile strength, tensile elongation and fuel permeability were measured according to the above described methods, and the results are shown in Table 1.

It was found from morphology observation with a scanning electron microscope (made by JEOL Ltd.) that the thermoplastic polymer compositions obtained in Examples 1 to 8 have a structure in which the fluororubber (A) forms a continuous phase and the crosslinked fluororubber (B) forms a dispersion phase.

### COMPARATIVE EXAMPLE 1

By employing pellets of the fluororesin (A) solely, measurements of flowability, tensile strength, tensile elongation and fuel permeability were conducted according to the above described methods, and the results are shown in Table 1.

### COMPARATIVE EXAMPLE 2

2.17 Parts by weight of the crosslinking agent (C-1), 0.43 part by weight of a crosslinking accelerator (benzyltriphenylphosphonium chloride: "TPP-ZC" available from Hokko Chemical Industrial Co., Ltd.), 3 parts by weight of an acid acceptor (magnesium oxide "MA150" available from Kyowa Chemical Industrial Co., Ltd.) and 6 parts by weight of an accelerator (calcium hydroxide "Cardic2000" available from Ohmi Chemical Industry Co., Ltd.) based on 100 parts by weight of the above described fluororubber (b-1α) were kneaded with two rolls, and the kneaded product was subjected to press-crosslinking at 160°C for ten minutes and then crosslinking in an oven at 180°C for four hours to produce a fluororubber (b-1α). A test piece was produced from the sheet of the obtained crosslinked fluororubber (b-1α) according to the above described method, and measurement of hardness, tensile strength at break, tensile elongation at break and compression set and evaluation of fuel permeability were carried out. The results are shown in Table 1.

**TABLE 1**

| | Ex. | | | | | | | | Com. Ex. | |
|---|---|---|---|---|---|---|---|---|---|---|
| | 1 | 2 | 3 | 4 | 5 | 6 | 7 | 8 | 1 | 2 |
| Composition (parts by weight) | | | | | | | | | | |
| Fluorine-containing ethylenic polymer (a) | 40 | 50 | 60 | 50 | 30 | 40 | 50 | 60 | 100 | |
| Fluororubber (b-1α) | 60 | 50 | 40 | | | | | | | 100 |
| Fluorine-containing thermoplastic elastomer (b-2) | | | | 50 | 70 | | | | | |
| Fluororubber (b-1β) | | | | | | 60 | 50 | 40 | | |
| Crosslinking agent (C-1) | 1.30 | 1.09 | 0.87 | | | 1.30 | 1.09 | 0.87 | | 2.17 |
| Crosslinking agent (C-2) | | | | 0.1 | 0.14 | | | | | |
| Evaluation results | | | | | | | | | | |
| Particle size of fluororubber (B) (µm) | 8 | 9 | 9 | 0.5 | 0.6 | 5 | 5 | 6 | - | - |
| Hardness JIS-A | 90 | 94 | 95 | 93 | 85 | 85 | 90 | 94 | - | 60 |
| MFR (g/10 min.) | 1.5 | 4.7 | 15 | 10 | 15 | 2.3 | 7.3 | 20.3 | 30 | - |
| Compression set (%) | 37 | 48 | 60 | 97 | 95 | 39 | 50 | 67 | - | 12 |
| Tensile strength at break (MPa) | 12 | 16 | 20 | 18 | 20 | 11 | 15 | 18 | 20 | 8 |
| Tensile elongation at break (%) | 240 | 290 | 280 | 410 | 450 | 225 | 267 | 253 | 300 | 270 |
| Fuel permeability (g·mm/m²·day) | 8.7 | 4.7 | 3.2 | 18.3 | 26.1 | 4.8 | 3.2 | 1.9 | 0.9 | 67 |

### INDUSTRIAL APPLICABILITY

The thermoplastic polymer composition of the present invention is flexible and excellent in moldability and has excellent heat resistance, chemical resistance, oil resistance and fuel barrier property since the thermoplastic polymer composition comprises a fluororesin and a crosslinked fluororubber and the crosslinked fluororubber is prepared by dynamically crosslinking at least one kind of fluororubber or a fluorine containing thermoplastic elastomer under melting condition.

## Claims

1. Molded article comprising a thermoplastic polymer composition which has a fuel permeability of 0.1-20 g mm/m² day at 40°C and comprises
(i) 10-95 wt.-% of a fluororesin (A) comprising a copolymer of tetrafluoroethylene and ethylene (a-1) having a melting point of 120-330°C; and
(ii) 90-5 wt.-% of a crosslinked fluororubber (B) obtained by cross-linking dynamically at least one kind of fluororubber (b-1) or a fluorine-containing thermoplastic elastomer (b-2) in the presence of the fluororesin (A) and a crosslinking agent (C) under melting condition; and
which molded article is selected from a single layer fuel hose; a single layer fuel container; a multilayer fuel hose; a multilayer fuel container; an O (square) ring, a tube, a packing, a valve core material, a hose, a sealing material and a diaphragm of an automobile fuel system; and a diaphragm, an O (square) ring, a valve, a tube, a packing, a hose and a sealing material of a fuel system of an aircraft, a rocket, a ship or a vessel.

2. The molded article of Claim 1, wherein the melting point of the polymer (a-1) is 150-310°C.

3. The molded article of Claim 1 or 2, wherein the crosslinking agent (C) is at least one selected from organic peroxides, amine compounds and polyhydroxy compounds.

4. The molded article of any of Claims 1-3, wherein the fluororubber (B) is vinylidene fluoride/ tetrafluoroethylene/hexafluoropropylene fluororubber.

5. The molded article of any of Claims 1-4, wherein the thermoplastic polymer composition has a structure having a continuous phase formed by the fluororesin (A) and a dispersion phase formed by the crosslinked fluororubber (B).

6. The molded article of Claim 5, wherein the crosslinked fluororubber (B) has an average particle size of dispersed rubbers of 0.01-30 µm.

7. The molded article of any of Claims 1-6, wherein the ratio of the melt viscosity of fluororesin (A) to the melt viscosity of fluororubber (b-1) or the fluorine-containing thermoplastic elastomer (b-2) is 0.1-1.5.

## Patentansprüche

1. Formartikel, umfassend eine thermoplastische Polymerzusammensetzung, die eine Kraftstoffdurchlässigkeit von 0,1 bis 20 g mm/m² Tag bei 40°C aufweist und umfasst:
(i) 10 bis 95 Gew.% eines Fluorharzes (A), das ein Copolymer aus Tetrafluorethylen und Ethylen (a-1) mit einem Schmelzpunkt von 120 bis 330°C umfasst; und
(ii) 90 bis 5 Gew.% eines vernetzten Fluorkautschuks (B), der durch dynamische Vernetzung von mindestens einer Art von Fluorkautschuk (b-1) oder einem fluorhaltigen thermoplastischen Elastomer (b-2) in Gegenwart des Fluorharzes (A) und eines Vernetzungsmittels (C) unter Schmelzbedingungen erhalten wird; und
wobei der Formartikel aus einem Einzelschicht-Kraftstoffschlauch; einem Einzelschicht-Kraftstoffbehälter; einem Mehrschicht-Kraftstoffschlauch; einem Mehrschicht-Kraftstoffbehälter; einem O (Quadrat)-Ring, einem Rohr, einer Dichtung, einem Ventilkernmaterial, einem Schlauch, einem Dichtungsmaterial und einer Membran aus einem Automobilkraftstoffsystem; und einer Membran, einem 0 (Quadrat)-Ring, einem Ventil, einem Rohr, einer Dichtung, einem Schlauch und einem Dichtungsmaterial aus einem Kraftstoffsystem von einem Flugzeug, einer Rakete, einem Schiff oder einem Fahrzeug ausgewählt ist.

2. Formartikel gemäß Anspruch 1, wobei der Schmelzpunkt des Polymers (a-1) 150 bis 310°C beträgt.

3. Formartikel gemäß Anspruch 1 oder 2, wobei das Vernetzungsmittel (C) zumindest eines ist, das aus organischen Peroxiden, Aminverbindungen und Polyhydroxyverbindungen ausgewählt wird.

4. Formartikel gemäß einem der Ansprüche 1 bis 3, wobei der Fluorkautschuk (B) Vinylidenfluorid/Tetrafluorethylen/ Hexafluorpropylen-Fluorkautschuk ist.

5. Formartikel gemäß einem der Ansprüche 1 bis 4, wobei die thermoplastische Polymerzusammensetzung eine Struktur aufweist, die eine kontinuierliche Phase, welche durch das Fluorharz (A) gebildet wird, und eine Dispersionsphase, die durch den vernetzten Fluorkautschuk (B) gebildet wird, hat.

6. Formartikel gemäß Anspruch 5, wobei der vernetzte Fluorkautschuk (B) eine durchschnittliche Teilchengröße von dispergierten Kautschuken von 0,01 bis 30 *µ*m hat.

7. Formartikel gemäß einem der Ansprüche 1 bis 6, wobei das Verhältnis der Schmelzviskosität des Fluorharzes (A) zu der Schmelzviskosität des Fluorkautschuks (b-1) oder des fluorhaltigen thermoplastischen Elastomers (b-2) 0,1 bis 1,5 beträgt.

## Revendications

1. Article moulé comprenant une composition de polymère thermoplastique qui présente une perméabilité au carburant allant de 0,1 à 20 g mm/m² jour à 40°C et comprend
(i) 10 à 95% en poids d'une résine fluorée (A) comprenant un copolymère de tétrafluoroéthylène et d'éthylène (a-1) ayant un point de fusion allant de 120 à 330°C ; et
(ii) 90 à 5% en poids d'un caoutchouc fluoré réticulé (B) obtenu par réticulation dynamique d'au moins un type de caoutchouc fluoré (b-1) ou d'un élastomère thermoplastique contenant du fluor (b-2) en présence de la résine fluorée (A) et d'un agent de réticulation (C) dans des conditions de fusion, et
lequel article moulé est choisi parmi un tuyau de carburant à une seule couche ; un réservoir de carburant à une seule couche ; un tuyau de carburant multicouche ; un réservoir de carburant multicouche ; un joint torique (carré), un tube, une garniture d'étanchéité, un matériau de noyau de soupape, un tuyau, un matériau d'étanchéité et un diaphragme d'un système d'alimentation en carburant pour automobiles ; et un diaphragme, un joint torique (carré), une soupape, un tube, une garniture d'étanchéité, un tuyau et un matériau d'étanchéité d'un système d'alimentation en carburant d'un aéronef, d'une fusée, d'un bateau ou d'un navire.

2. Article moulé de la revendication 1, dans lequel le point de fusion du polymère (a-1) est de 150 à 310°C.

3. Article moulé de la revendication 1 ou 2, dans lequel l'agent de réticulation (C) est au moins un composé choisi parmi des peroxydes organiques, des composés amines et des composés polyhydroxylés.

4. Article moulé de l'une des revendications 1 à 3, dans lequel le caoutchouc fluoré (B) est un caoutchouc fluoré de fluorure de vinylidène/tétrafluoroéthylène/hexafluoropropylène.

5. Article moulé de l'une des revendications 1 à 4, dans lequel la composition de polymère thermoplastique a une structure ayant une phase continue formée par la résine fluorée (A) et une phase de dispersion formée par le caoutchouc fluoré réticulé (B).

6. Article moulé de la revendication 5, dans lequel le caoutchouc fluoré réticulé (B) présente une taille moyenne de particules de caoutchoucs dispersés allant de 0,01 à 30 *µ*m.

7. Article moulé de l'une des revendications 1 à 6, dans lequel le rapport de la viscosité à l'état fondu de la résine fluorée (A) sur la viscosité à l'état fondu du caoutchouc fluoré (b-1) ou de l'élastomère thermoplastique contenant du fluor (b-2) est de 0,1 à 1,5.
